# EUROPÄISCHE PATENTSCHRIFT

(11) **EP 1 899 189 B1**
(45) Veröffentlichungstag und Bekanntmachung des Hinweises auf die Patenterteilung: **29.04.2009**
(21) Anmeldenummer: 06777467.9
(22) Anmeldetag: 27.06.2006
(51) Int. Cl.: B60K 15/035, B60K 15/077, F02M 37/10

(54) **VORRICHTUNG ZUM FÖRDERN VON KRAFTSTOFF AUS EINEM KRAFTSTOFF-BEHÄLTER**
DEVICE FOR DELIVERING FUEL OUT OF A FUEL TANK
DISPOSITIF DESTINE A REFOULER DU CARBURANT CONTENU DANS UN RESERVOIR DE CARBURANT

(30) Priorität: 04.07.2005 DE 102005031430
(43) Veröffentlichungstag der Anmeldung: 19.03.2008
(73) Patentinhaber: Continental Automotive GmbH, 30165 Hannover (DE)
(72) Erfinder: FUEHLING, Stefan, 58300 Wetter (DE); ALTHOF, Andreas, 44149 Dortmund (DE); KROGULL, Christian, 58455 Witten (DE); MEYER, Knut, 45239 Essen (DE); REITER, Frank, 42781 Haan (DE)
(86) Internationale Anmeldenummer: PCT/EP2006/063571
(87) Internationale Veröffentlichungsnummer: WO 2007/003526

(56) Entgegenhaltungen:
- EP-A- 0 922 603
- EP-A- 1 031 725
- WO-A-00/56564
- WO-A-20/05017340
- DE-A1- 10 028 985
- DE-A1- 19 627 577
- DE-A1- 19 954 541
- US-A- 5 389 245

## Beschreibung

Gegenstand der Erfindung ist eine Vorrichtung zum Fördern von Kraftstoff aus einem Kraftstoffbehälter mit einer in einem Kraftstoffbehälter angeordneten Kraftstoff-Fördereinheit, bestehend aus einem Schwalltopf mit einer darin angeordneten Kraftstoffpumpe zum Fördern von Kraftstoff aus dem Schwalltopf über eine Vorlaufleitung zu einer Brennkraftmaschine und mit einem in dem Kraftstoffbehälter angeordneten Entlüftungssystem zum Abführen von Kraftstoffdämpfen aus dem Kraftstoffbehälter, bestehend aus Entlüftungsleitungen und einer Flüssigkeitsfalle zum Abscheiden von Kraftstoff, wobei die Entlüftungsleitungen mit einem Ende im oberen Bereich des Kraftstoffbehälters angeordnet sind und mit ihrem anderen Ende in die Flüssigkeitsfalle münden, und mit einem Aktivkohlefilter, welcher stromabwärts der Flüssigkeitsfalle angeordnet ist und eine Verbindung zur Atmosphäre aufweist.

Eine derartige Vorrichtung ist aus der DE 103 35 626 A1 bekannt. In einem Kraftstoffbehälter ist ein Schwalltopf einer Kraftstoff-Fördereinheit angeordnet, in dem eine Kraftstoffpumpe zum Fördern von Kraftstoff aus dem Schwalltopf über eine Vorlaufleitung zu einer Brennkraftmaschine befestigt ist. Die Vorrichtung umfasst weiterhin ein Entlüftungssystem, welches zur Verringerung der Kraftstoffemissionen innerhalb des Kraftstoffbehälters angeordnet ist. Das Entlüftungssystem umfasst einen als Flüssigkeitsfalle wirkenden Ausperlbehälter, an den Entlüftungsleitungen angeschlossen sind. Der Ausperlbehälter ist mit einem Flansch verbunden, so daß das Entlüftungssystem im oberen Bereich des Kraftstoffbehälters angeordnet ist. An dem Ausperlbehälter ist eine durch den Flansch führende Leitung 18 angeschlossen, die zu einem außerhalb des Kraftstoffbehälters liegenden Aktivkohlefilter führt. Über diese Leitung werden die Gase aus dem Ausperlbehälter nach Reinigung im Aktivkohlefilter an die Atmosphäre abgegeben. Nachteilig hierbei ist der hohe. Montageaufwand für diese Vorrichtung. So muß zuerst die Fördereinheit montiert werden, bevor anschließend das Entlüftungssystem im Kraftstoffbehälter montiert werden kann. Insbesondere das Verbinden der Fördereinheit mit dem Ausperlbehälter gestaltet sich hierbei schwierig. Zudem wird die Anordnung von Fördereinheit und Entlüftungssystem aufgrund immer flacher werdender Kraftstoffbehälter erschwert.

Weiterhin ist aus der DE 100 28 985 A1 ist ein Kraftstoff-Förder- und Lüftungssystem benannt, bei dem der Schwalltopf einer Fördereinheit gemäß dem einleitenden Teil des Anspruchs 1 mit einem Ausgleichbehälter eines Entlüftungssystems verbunden ist. Der Aktivkohlefilter liegt außerhalb des Kraftstoffbehälters. Aufgrund der großen Abmessungen des Ausgleichbehälters muß die Montage dieses Kraftstoff-Förder- und Lüftungssystem während der Herstellung des Kraftstoffbehälters in einem Zwischenschritt erfolgen. Eine Montage des Kraftstoff-Förder- und Lüftungssystem in den fertigen Kraftstoffbehälter ist nicht möglich, da die Größe und Anzahl der Öffnungen am Kraftstoffbehälter aufgrund der damit verbundenen Kraftstoffemissionen möglichst gering ausgebildet werden.

Der vorliegenden Erfindung liegt daher die Aufgabe zugrunde, eine Vorrichtung der eingangs genannten Art zu schaffen, welche sich auch in einem fertig hergestellten Kraftstoffbehälter mit geringer Bauhöhe montieren lässt. Die Montage soll darüber hinaus möglichst einfach sein.

Gelöst wird die Aufgabe dadurch, dass die Flüssigkeitsfalle und der Aktivkohlefilter seitlich neben dem Schwalltopf und in Höhe des Schwalltopfes angeordnet sind, und daß zumindest die Flüssigkeitsfalle mit dem Schwalltopf mechanisch verbunden ist.

Durch die Anordnung der Flüssigkeitsfalle und des Aktivkohlefilters seitlich neben dem Schwalltopf benötigt die erfindungsgemäße Vorrichtung oberhalb des Schwalltopfes keinen zusätzlichen Bauraum, wodurch die Vorrichtung eine geringe Bauhöhe aufweist und daher besonders für den Einsatz in flachen Kraftstoffbehältern geeignet ist. Die Anordnung von Schwalltopf, Flüssigkeitsfalle und Aktivkohlefilter ermöglicht einen modularen Aufbau und damit eine breite Anpassungsmöglichkeiten an verschiedene Anwendungsfälle. Indem der Aktivkohlefilter in die Vorrichtung integriert ist, wird die Montage infolge des Modulaufbaus vereinfacht. Zusätzliche Befestigungen des Aktivkohlefilters am Kraftfahrzeug und außerhalb des Kraftstoffbehälters entfallen. Die Anordnung des Aktivkohlefilters innerhalb des Kraftstoffbehälters hat darüber hinaus den Vorteil, daß sich dadurch die vom Kraftstoffsystem verursachten Emissionen infolge der außerhalb des Kraftstoffbehälters entfallenen Verbindungsstellen verringern.

Die Verbindung der Flüssigkeitsfalle und/oder des Aktivkohlefilters gestaltet sich besonders einfach, wenn sie mittels einer Rast- und Steckverbindung mit dem Schwalltopf verbunden sind. Insbesondere bei einer Montage der Flüssigkeitsfalle und des Aktivkohlefilters mit dem Schwalltopf innerhalb des Kraftstoffbehälters lässt sich die Verbindung mit dem Schwalltopf einfach herstellen.

Das Vorsehen von Rast- und Steckelementen am Schwalltopf, an der Flüssigkeitsfalle und/oder am Aktivkohlefilter kann entfallen, wenn die Flüssigkeitsfalle und/oder der Aktivkohlefilter stofflich, vorzugsweise mittels Schweißen, mit dem Schwalltopf verbunden sind.

Eine nachträgliche Verbindung der Flüssigkeitsfalle und/oder des Aktivkohlefilters wird vermieden, wenn an dem Schwalltopf mindestens ein Bereich für die Flüssigkeitsfalle und/oder den Aktivkohlefilter einteilig angeformt ist. Sofern der Schwalltopf mittels Spritzgießens hergestellt wird, lässt sich die einteilige Verbindung in einfacher Weise dadurch erreichen, daß der mindestens eine Bereich ebenfalls mittels Spritzgießens während der Herstellung des Schwalltopfes erzeugt wird.

In einer anderen vorteilhaften Ausgestaltung ist der Aktivkohlefilter an der Flüssigkeitsfalle angeordnet ist. Sofern die Flüssigkeitsfalle und der Aktivkohlefilter eine geringe Bauhöhe aufweisen, hat es sich als vorteilhaft erwiesen, den Aktivkohlefilter über der Flüssigkeitsfalle anzuordnen. Da sich die Kraftstoffdämpfe in der Flüssigkeitsfalle ohnehin im oberen Bereich sammeln, kann auf eine aufwändige Verbindung zwischen Kühlfalle und Aktivkohlefilter verzichtet werden. Die im oberen Bereich angeordnete Verbindung bietet darüber hinaus einen guten Schutz gegen das Eindringen von Kraftstoff aus der Kühlfalle in den Aktivkohlefilter.

In einer anderen Ausgestaltung wird eine gut durch eine Öffnung im Kraftstoffbehälter einsetzbare Vorrichtung dadurch erreicht, daß die Flüssigkeitsfalle und/oder der Aktivkohlefilter auf einer Seite des Schwalltopfes an diesem angeordnet sind. Dabei ist der Aktivkohlfilter vorteilhafterweise auf der dem Schwalltopf gegenüberliegenden Seite der Flüssigkeitsfalle angeordnet.

In einer ebenfalls einfachen Ausgestaltung sind die Flüssigkeitsfalle und der Aktivkohlefilter an verschiedenen Seiten des Schwalltopfes an diesem angeordnet sind. Die Lage der Flüssigkeitsfalle und des Aktivkohlefilters kann dabei in weiten Grenzen an die Platzverhältnisse im Kraftstoffbehälter angepasst werden, wodurch die erfindungsgemäße Vorrichtung vielseitig einsetzbar ist.

Um einerseits leicht in den Kraftstoffbehälter einsetzbar zu sein und andererseits eine ausreichende Filterkapazität zu besitzen, besteht der Aktivkohlefilter aus zwei hintereinandergeschalteten Behältern, welche am Schwalltopf und/oder an der Flüssigkeitsfalle befestigt sind. Die beiden Behälter des Aktivkohlefilters können sowohl an verschiedenen Seiten oder an einer Seite des Schwalltopfes angeordnet sein.

Die Montage des Aktivkohlefilters und der Flüssigkeitsfalle als einzelne Baugruppen lässt sich vereinfachen, wenn beide jeweils ein offenes Gehäuse aufweisen, welche mit einem gemeinsamen Deckel verschlossen sind.

Bei einer Anordnung des Aktivkohlefilters neben der Flüssigkeitsfalle lässt sich eine Verbindung zwischen dem Aktivkohlefilter und der Flüssigkeitsfalle besonders einfach realisieren, wenn der gemeinsame Deckel eine Überströmverbindung zwischen dem Aktivkohlefilter und der Flüssigkeitsfalle aufweist.

Zur Vermeidung eine Kraftstoffeintritts in den Aktivkohlefilter im Falle einer Überkopflage des Kraftfahrzeugs ist in der Verbindung zwischen der Flüssigkeitsfalle und dem Aktivkohlefilter ein Roll-over-Ventil angeordnet ist. Das Roll-over-Ventil lässt sich einfach montieren, wenn es in der Flüssigkeitsfalle angeordnet ist.

Ein besonders leichtes Einsetzen der Vorrichtung in den Kraftstoffbehälter wird mit einer Anordnung des Aktivkohlefilters und der Flüssigkeitsfalle auf einer Seite des Schwalltopfes erreicht, wenn der Aktivkohlefilter und die Flüssigkeitsfalle eine geringere Höhe als der Schwalltopf, vorzugsweise weniger als zwei Drittel der Höhe des Schwalltopfes, aufweisen.

Zum Abführen von in der Flüssigkeitsfalle angesammeltem Kraftstoff besitzt die Flüssigkeitsfalle ein Ablassventil. Ein zuverlässiges Abführen des Kraftstoffs aus der Flüssigkeitsfalle wird mit einer aktiven Absaugung erreicht, vorzugsweise mit einer der Flüssigkeitsfalle zugeordneten Saugstrahlpumpe erreicht.

Die Saugstrahlpumpe ist einfach zu montieren, wenn sie in der Flüssigkeitsfalle angeordnet ist.

Eine Verringerung des nutzbaren Volumens der Flüssigkeitsfalle wird in einer anderen Ausgestaltung dadurch vermieden, daß die Saugstrahlpumpe neben der Flüssigkeitsfalle angeordnet und die Ansaugöffnung der Saugstrahlpumpe mit der Flüssigkeitsfalle verbunden ist.

Zum Betrieb der Saugstrahlpumpe besitzt diese eine Treibstrahlleitung, welche mit der Vorlaufleitung der Kraftstoffpumpe verbunden ist.

Die Montage der Saugstrahlpumpe lässt sich verkürzen, wenn zumindest ein Teil der Treibstrahlleitung von dem Gehäuse der Flüssigkeitsfalle und/oder des Aktivkohlefilters gebildet wird. Der Entfall zumindest von Teilen der Treibstrahlleitung ermöglicht eine kostengünstigere Herstellung der Vorrichtung.

Gemäß einer weiteren vorteilhaften Ausgestaltung mündet der Summenstrahl der Saugstrahlpumpe in den Schwalltopf.

Eine besonders einfaches Einbringen der Vorrichtung in den Kraftstoffbehälter wird dadurch erreicht, daß der Schwalltopf über mindestens eine Abstützung mit einem Flansch zum Verschließen einer Öffnung des Kraftstoffbehälter verbunden ist, wobei die Abstützung schwenkbar mit dem Schwalltopf verbunden ist. Die schwenkbare Anbindung der Abstützung an dem Schwalltopf erlaubt während des Einsetzens ein gleichzeitiges Verschwenken der Vorrichtung aus einer verschwenkten Position in die Einbaulage.

An mehreren Ausführungsbeispielen wird die Erfindung näher erläutert. Es zeigen in
- Figur 1:: eine schematische Darstellung eines Schnitts durch einen Kraftstoffbehälter mit der erfindungsgemäßen Vorrichtung,
- Figur 2:: einen Schnitt A-A der Vorrichtung aus Figur 1,
- Figur 3:: eine zweite Ausführungsform der Vorrichtung nach Figur 1,
- Figur 4:: einen Schnitt B-B der Vorrichtung aus Figur 3,
- Figur 5:: eine dritte Ausführungsform der Vorrichtung nach Figur 1,
- Figur 6:: einen Schnitt C-C aus Figur 5 und
- Figur 7:: eine vierte Ausführungsform der Vorrichtung in ei- ner Draufsicht.

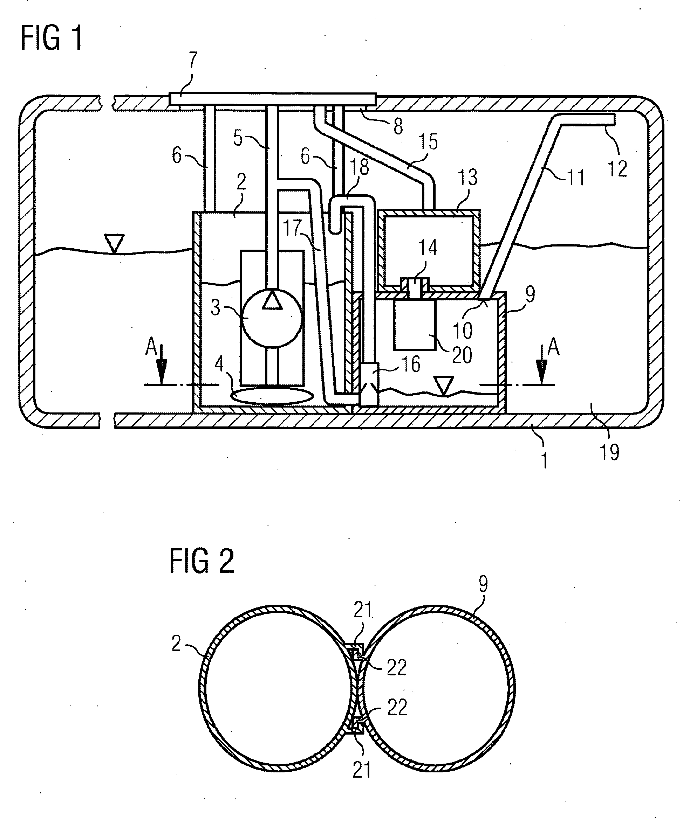

In dem in Figur 1 dargestellten Kraftstoffbehälter 1 ist ein Schwalltopf 2 mit einer darin befestigten Kraftstoffpumpe 3 angeordnet. Der Kraftstoffpumpe 3 ist ein Pumpenvorfilter 4 vorgeschaltet, über den die Kraftstoffpumpe 3 Kraftstoff ansaugt und über eine Vorlaufleitung 5 zu einer nicht dargestellten Brennkraftmaschine eines Kraftfahrzeugs fördert. Der Schwalltopf wird von zwei Abstützungen 6 gegen den Boden des Kraftstoffbehälters 1 vorgespannt. Die Abstützungen sind in einem Flansch 7 gelagert, der eine Öffnung 8 im Kraftstoffbehälter 1 verschließt.

Seitlich neben dem Schwalltopf 2 und am Boden des Kraftstoffbehälters 1 ist eine Flüssigkeitsfalle 9 angeordnet. Im oberen Bereich der Flüssigkeitsfalle 9 mündet in dieser schematischen Darstellung mit einem Ende 10 nur eine Entlüftungsleitung 11, wobei das gesamte Entlüftungssystem mehrere Entlüftungsleitungen umfasst. Das andere Ende 12 der Entlüftungsleitung 11 ist bis in den oberen Bereich des Kraftstoffbehälters 1 geführt. An der Oberseite der Flüssigkeitsfalle 9 ist ein Aktivkohlefilter 13 befestigt. Über eine Verbindung 14 ist die Flüssigkeitsfalle 9 mit dem Aktivkohlefilter 13 verbunden. Eine Leitung 15 verbindet den Aktivkohlefilter 13 mit der Atmosphäre, wobei die Leitung 15 durch den Flansch 7 aus dem Kraftstoffbehälter 1 geführt ist. In der Flüssigkeitsfalle 9 ist weiterhin eine Saugstrahlpumpe 16 angeordnet, welche über eine Treibmittelleitung 17, die von der Vorlaufleitung 5 abzweigt, angetrieben wird. Die sich an die Saugstrahlpumpe 16 anschließende Summenstrahlleitung 18 mündet in den Schwalltopf 2.

Im Betrieb der Vorrichtung fördert die Kraftstoffpumpe 3 Kraftstoff 19 über die Vorlaufleitung 5 zur Brennkraftmaschine. Der sich im oberen Bereich des Kraftstoffbehälters 1 ansammelnde Kraftstoffdampf wird über die Entlüftungsleitung 11 in die Flüssigkeitsfalle 9 geführt. In der Flüssigkeitsfalle 9 wird aus dem Kraftstoffdampf Kraftstoff abgeschieden, der sich im unteren Bereich der Flüssigkeitsfalle 9 sammelt. Dieser Kraftstoff wird von der Saugstrahlpumpe 16 abgesaugt und über die Summenstrahlleitung 18 dem Schwalltopf 2 zugeführt. Die verbleibenden Gase strömen über die Verbindung 14 in den Aktivkohlefilter 13, wobei an der Verbindung 14 in der Flüssigkeitsfalle 9 ein Roll-over-Ventil 20 angeordnet ist. Die im Aktivkohlefilter 13 gereinigten Gase werden anschließend über die Leitung 15 an die Atmosphäre abgegeben.

Der in Figur 2 dargestellte Schnitt A-A zeigt die Vorrichtung in einer vereinfachten Darstellung in einer Draufsicht. Die Flüssigkeitsfalle 9 ist seitlich neben dem Schwalltopf 2 angeordnet. Über am Schwalltopf 2 angeformte Rastelemente 21 und entsprechend ausgebildeten Raststellen 22 an der Flüssigkeitsfalle 9 sind der Schwalltopf 2 und die Flüssigkeitsfalle 9 miteinander mechanisch verbunden. Somit lassen sich die Flüssigkeitsfalle 9 und der Schwalltopf 2 nacheinander durch die Öffnung 8 in den Kraftstoffbehälter 1 einsetzen und anschließend mittels der Rastelemente 21, 22 miteinander verbinden.

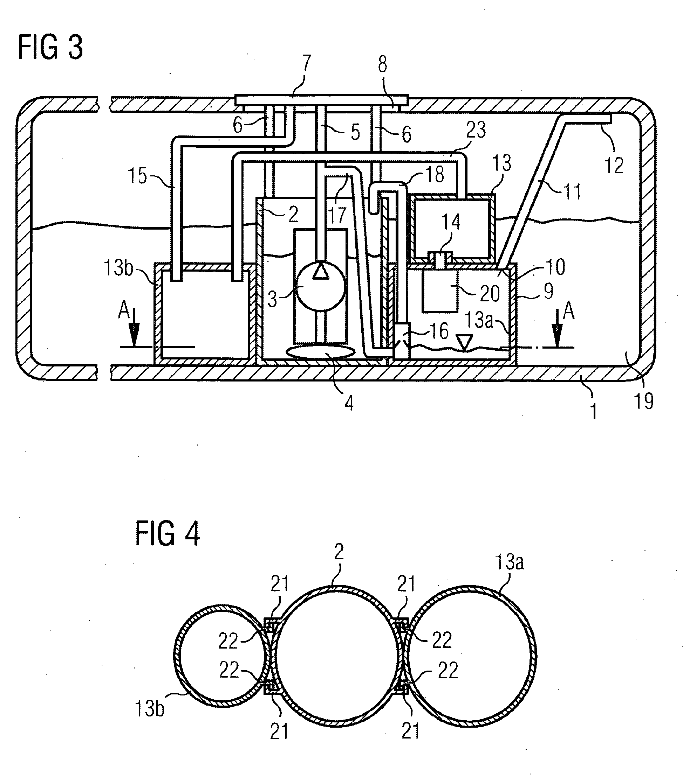

Die Vorrichtung nach Figur 3 entspricht im Wesentlichen der Vorrichtung nach Figur 1. Im Unterschied zu Figur 1 besitzt der Aktivkohlefilter 13 ein größeres Volumen, welches zur einfacheren Montage auf zwei Behälter 13a, 13b, welche nacheinander geschaltet sind, aufgeteilt ist. Die beiden Behälter 13a, 13b sind zu beiden Seiten des Schwalltopfes 2 angeordnet und mit einer Leitung 23 verbunden. In der gezeigten Darstellung liegen die Symmetrieachsen Behälter 13a, 13b und des Schwalltopfes 2 in der Zeichenebene. In Abhängigkeit von den Platzverhältnissen im Kraftstoffbehälter 1 können die Behälter 13a, 13b aber auch zueinander in einem Winkel von kleiner als 180° am Umfang des Schwalltopfes 2 angeordnet sein.

Der Schnitt B-B in Figur 4 zeigt die Vorrichtung in einer Draufsicht. An gegenüberliegenden Seiten des Schwalltopfes 2 angeformte Rastelemente 21 greifen in entsprechend ausgebildete Raststellen 22 der Behälter 13a, 13b des Aktivkohlefilters. Die Montage gestaltet sich ebenfalls relativ einfach in dem beispielsweise zuerst der Behälter 13a in den Kraftstoffbehälter 1 eingesetzt wird. Anschließend wird der Schwalltopf 2 eingesetzt und mit dem Behälter 13a verbunden. Nachdem die halbfertig montierte Vorrichtung zur Seite geschoben wird, lässt sich der Behälter 13b problemlos durch die Öffnung 8 in den Kraftstoffbehälter 1 einsetzen und mit dem Schwalltopf 2 verbinden.

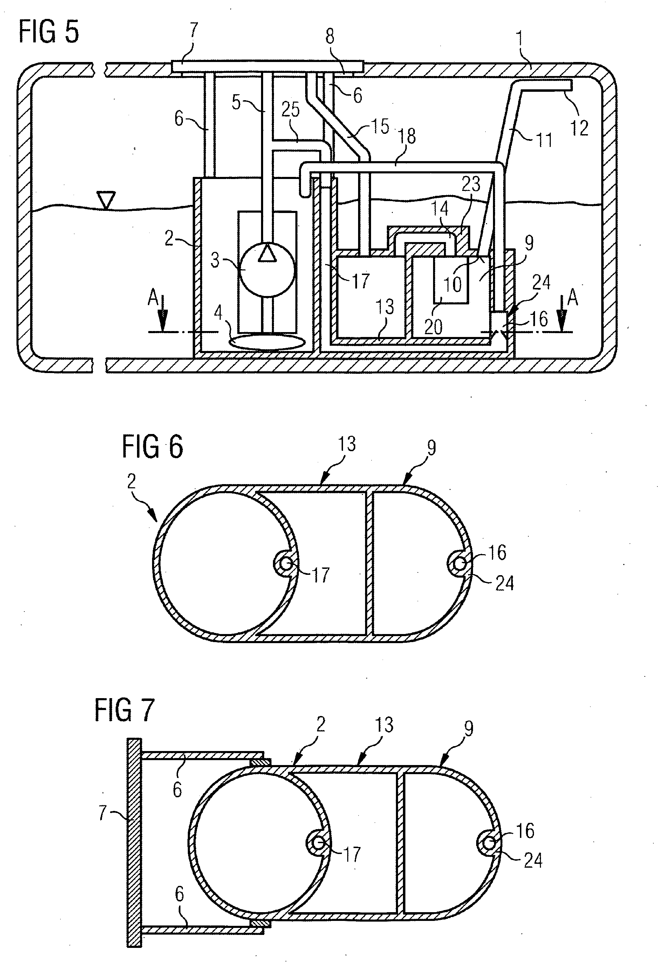

Die Vorrichtung in Figur 5 besitzt gegenüber der Vorrichtung in Figur 1 einen veränderten Aufbau des Schwalltopfes 2. Der Schwalltopf 2, die Flüssigkeitsfalle 9 und der Aktivkohlefilter 13 sind einteilig miteinander verbunden, indem sie eine gemeinsames Gehäuse aufweisen, welches mittels Spritzgießen hergestellt wird. Im Bereich der Flüssigkeitsfalle 9 und des Aktivkohlefilter 13 besitzt das Gehäuse eine geringere Höhe als im Bereich des Schwalltopfes 2. Mit dieser Gehäusegestaltung lässt sich die Vorrichtung durch die Öffnung 8 in den Kraftstoffbehälter 1 einsetzen. Die Flüssigkeitsfalle 9 und der Aktivkohlefilter 13 besitzen einen gemeinsamen Deckel 23, der das Gehäuse in diesem Bereich verschließt. Eine im Deckel 23 angeordnete Überströmverbindung 14 verbindet die Flüssigkeitsfalle 9 mit dem Aktivkohlefilter 13. In dem Gehäuse ist im Bereich der Flüssigkeitsfalle 9 eine Aufnahme 24 angespritzt, in die die Saugstrahlpumpe 16 eingesetzt ist. Die Treibstrahlleitung 17 zum Betreiben der Saugstrahlpumpe 16 ist ebenfalls in das Gehäuse eingespritzt, so daß eine zusätzlich anzuordnende Treibmittelleitung entfällt. Lediglich von der Vorlaufleitung 5 bis zum Anfang der Treibmittelleitung im Gehäuse ist eine Verbindungsleitung 25 vorgesehen. Figur 6 zeigt das Gehäuse der Vorrichtung aus Figur 5 in einer Draufsicht im Schnitt C-C.

Figur 7 zeigt eine weitere Ausführungform der Vorrichtung, in der die Abstützungen 6 schwenkbar am Gehäuse im Bereich des Schwalltopfes 2 befestigt sind. In der gezeigten Darstellung sind die Abstützungen mit dem Flansch 7 zur Montage um 90° in die Zeichenebene verschwenkt, wodurch ein erleichtertes Einsetzen der Vorrichtung in den Kraftstoffbehälter 1 ermöglicht wird. Sobald das Gehäuse durch die Öffnung 8 in den Kraftstoffbehälter eingesetzt wurde, werden die Abstützungen 6 mit dem Flansch zurückgeschwenkt, so daß die Vorrichtung der in Figur 5 gezeigten Vorrichtung entspricht. Diese Ausführungsform beschränkt das Vorsehen der schwenkbaren Abstützungen 6 nicht auf die gezeigte Gehäusegestaltung. Die schwenkbare Anordnung der Abstützungen 6 ist auch dann möglich, wenn an gegenüberliegenden Seiten des Schwalltopfes 2 Behälter gemäß Figur 4 angeordnet sind, wobei die schwenkbare Abstützung auch en einem der Behälter angeordnet sein kann.

## Patentansprüche

1. Vorrichtung zum Fördern von Kraftstoff aus einem Kraftstoffbehälter (1) mit einer in einem Kraftstoffbehälter (1) angeordneten Kraftstoff-Fördereinheit, bestehend aus einem Schwalltopf (2) mit einer darin angeordneten Kraftstoffpumpe (3) zum Fördern von Kraftstoff aus dem Schwalltopf (2) über eine Vorlaufleitung (5) zu einer Brennkraftmaschine und mit einem in dem Kraftstoffbehälter (1) angeordneten Entlüftungssystem zum Abführen von Kraftstoffdämpfen aus dem Kraftstoffbehälter (1), bestehend aus Entlüftungsleitungen (11) und einer Flüssigkeitsfalle (9) zum Abscheiden von Kraftstoff, wobei die Entlüftungsleitungen (11) mit einem Ende im oberen Bereich des Kraftstoffbehälters (1) angeordnet sind und mit ihrem anderen Ende in die Flüssigkeitsfalle (9) münden, und mit einem Aktivkohlefilter (13), welcher stromabwärts der Flüssigkeitsfalle (9) angeordnet ist und eine Verbindung zur Atmosphäre aufweist, **dadurch gekennzeichnet, daß** die Flüssigkeitsfalle (9) und der Aktivkohlefilter (13) seitlich neben dem Schwalltopf (2) und in Höhe des Schwalltopfes (2) angeordnet sind, und daß zumindest die Flüssigkeitsfalle (9) mit dem Schwalltopf (2) mechanisch verbunden ist.

2. Vorrichtung nach Anspruch 1, **dadurch gekennzeichnet, daß** die Flüssigkeitsfalle (9) und/oder der Aktivkohlefilter (13) mittels einer Rast- und Steckverbindung (21, 22) mit dem Schwalltopf (2) verbunden sind.

3. Vorrichtung nach Anspruch 1, **dadurch gekennzeichnet, daß** die Flüssigkeitsfalle (9) und/oder der Aktivkohlefilter (13) stofflich, vorzugsweise mittels Schweißen, mit dem Schwalltopf (2) verbunden sind.

4. Vorrichtung nach Anspruch 3, **dadurch gekennzeichnet, daß** an dem Schwalltopf (2) mindestens ein Bereich für die Flüssigkeitsfalle (9) und/oder den Aktivkohlefilter (13) einteilig angeformt ist, vorzugsweise mittels Spitzgießens.

5. Vorrichtung nach einem der vorhergehenden Ansprüche, **dadurch gekennzeichnet, daß** der Aktivkohlefilter (13) an der Flüssigkeitsfalle (9) angeordnet ist.

6. Vorrichtung nach einem der vorhergehenden Ansprüche, **dadurch gekennzeichnet, daß** die Flüssigkeitsfalle (9) und/oder der Aktivkohlefilter (13) auf einer Seite des Schwalltopfes (2) an diesem angeordnet sind.

7. Vorrichtung nach einem der Ansprüche 1 bis 5, **dadurch gekennzeichnet, daß** die Flüssigkeitsfalle (9) und der Aktivkohlefilter (13) an verschiedenen Seiten des Schwalltopfes (2) an diesem angeordnet sind.

8. Vorrichtung nach einem der vorhergehenden Ansprüche, **dadurch gekennzeichnet, daß** der Aktivkohlefilter (13) aus zwei hintereinandergeschalteten Behältern (13a, 13b) besteht, welche am Schwalltopf (2) und/oder an der Flüssigkeitsfalle (9) befestigt sind.

9. Vorrichtung nach einem der vorhergehenden Ansprüche, **dadurch gekennzeichnet, daß** der Aktivkohlefilter (13) und die Flüssigkeitsfalle (9) jeweils ein offenes Gehäuse aufweisen, welche mit einem gemeinsamen Deckel (23) verschlossen sind.

10. Vorrichtung nach Anspruch 9, **dadurch gekennzeichnet, daß** der gemeinsame Deckel (23) eine Überströmverbindung (14) zwischen der Flüssigkeitsfalle (9) und dem Aktivkohlefilter (13) aufweist.

11. Vorrichtung nach einem der vorhergehenden Ansprüche, **dadurch gekennzeichnet, daß** in der Flüssigkeitsfalle (9) an der Verbindung (14) zum Aktivkohlefilter (13) ein Roll-over-Ventil (20) angeordnet ist.

12. Vorrichtung nach einem der vorhergehenden Ansprüche, **dadurch gekennzeichnet, daß** der Aktivkohlefilter (13) und die Flüssigkeitsfalle (9) eine geringere Höhe als der Schwalltopf (2) aufweisen.

13. Vorrichtung nach einem der vorhergehenden Ansprüche, **dadurch gekennzeichnet, daß** der Flüssigkeitsfalle (9) eine Saugstrahlpumpe (16) zum Abführen von in der Flüssigkeitsfalle (9) angesammelten Kraftstoff zugeordnet ist.

14. Vorrichtung nach Anspruch 13, **dadurch gekennzeichnet, daß** die Saugstrahlpumpe (16) in der Flüssigkeitsfalle (9) angeordnet ist.

15. Vorrichtung nach Anspruch 13, **dadurch gekennzeichnet, daß** die Saugstrahlpumpe (16) neben der Flüssigkeitsfalle (9) angeordnet ist und die Ansaugöffnung der Saugstrahlpumpe (16) mit der Flüssigkeitsfalle (9) verbunden ist.

16. Vorrichtung nach einem der vorhergehenden Ansprüche 13, 15, **dadurch gekennzeichnet, daß** die Saugstrahlpumpe (16) eine Treibstrahlleitung (17, 25) besitzt, welche mit der Vorlaufleitung (5) der Kraftstoffpumpe (3) verbunden ist.

17. Vorrichtung nach Ansprüch 16, **dadurch gekennzeichnet, daß** zumindest ein Teil der Treibstrahlleitung (17) von dem Gehäuse der Flüssigkeitsfalle (9) und/oder des Aktivkohlefilters (13) gebildet wird.

18. Vorrichtung nach einem der vorhergehenden Ansprüche 13-17, **dadurch gekennzeichnet, daß** der Summenstrahl (18) der Saugstrahlpumpe (16) in den Schwalltopf (2) mündet.

19. Vorrichtung nach einem der vorhergehenden Ansprüche, **dadurch gekennzeichnet, daß** der Schwalltopf (2) über mindestens eine Abstützung (6) mit einem Flansch (7) zum Verschließen einer Öffnung (8) des Kraftstoffbehälters (1) verbunden ist, wobei die Abstützung (6) schwenkbar mit dem Schwalltopf (2) verbunden ist.

## Claims

1. Device for delivering fuel out of a fuel tank (1), comprising a fuel delivery unit, which is arranged inside a fuel tank (1) and which consists of a swirl pot (2) with a fuel pump (3) arranged therein for delivering fuel out of the swirl pot (2) via a feed line (5) to an internal combustion engine, and a venting system, which is arranged inside the fuel tank (1) and serves to lead off fuel vapors from the fuel tank (1), and which comprises venting lines (11) and a liquid trap (9) for precipitating fuel, the venting lines (11) being arranged with one end in the upper area of the fuel tank (1) and with their other end open out into the liquid trap (9), an activated charcoal filter (13) being arranged downstream of the liquid trap (9) and having a connection to the atmosphere, **characterized in that** the liquid trap (9) and the activated charcoal filter (13) are arranged laterally next to the swirl pot (2) and on a level with the swirl pot (2), and that the liquid trap (9), at least, is mechanically connected to the swirl pot (2).

2. Device according to Claim 1, **characterized in that** the liquid trap (9) and/or the activated charcoal filter (13) are connected to the swirl pot (2) by means of a snaplocking connection (21, 22).

3. Device according to Claim 1, **characterized in that** the liquid trap (9) and/or the activated charcoal filter (13) are connected to the swirl pot (2) by a cohesive material joint, preferably by welding.

4. Device according to Claim 3, **characterized in that** at least one area for the liquid trap (2) and/or the activated charcoal filter (13) is integrally formed on the swirl pot (2), preferably by injection molding.

5. Device according to any one of the preceding claims, **characterized in that** the activated charcoal filter (13) is arranged on the liquid trap (9).

6. Device according to any one of the preceding claims, **characterized in that** the liquid trap (9) and/or the activated charcoal filter (13) are arranged laterally on one side of the swirl pot (2).

7. Device according to any one of the Claims 1 to 5, **characterized in that** the liquid trap (9) and the activated charcoal filter (13) are arranged laterally on different sides of the swirl pot (2).

8. Device according to any one of the preceding claims, **characterized in that** the activated charcoal filter (13) comprises two vessels (13a, 13b) connected in series, which are fixed to the swirl pot (2) and/or to the liquid trap (9).

9. Device according to any one of the preceding claims, **characterized in that** the activated charcoal filter (13) and the liquid trap (9) each have an open housing sealed by a common cover (23).

10. Device according to Claim 9, **characterized in that** the common cover (23) has an overflow connection (14) between the liquid trap (9) and the activated charcoal filter (13).

11. Device according to any one of the preceding claims, **characterized in that** in the liquid trap (9), a roll-over valve (20) is arranged on the connection (14) to the activated charcoal filter (13).

12. Device according to any one of the preceding claims, **characterized in that** the activated charcoal filter (13) and the liquid trap (9) have a lower height than the swirl pot (2).

13. Device according to any one of the preceding claims, **characterized in that** a suction-jet pump (16) for leading off fuel that has collected in the liquid trap (9) is assigned to the liquid trap (9).

14. Device according to Claim 13, **characterized in that** the suction-jet pump (16) is arranged in the liquid trap (9).

15. Device according to Claim 13, **characterized in that** the suction-jet pump (16) is arranged next to the liquid trap (9) and the intake aperture of the suction-jet pump (16) is connected to the liquid trap (9).

16. Device according to any one of the preceding Claims 13 - 15, **characterized in that** the suction-jet pump (16) has a motive jet line (17,25), which is connected to the feed line (5) of the fuel pump (3).

17. Device according to Claim 16, **characterized in that** at least a part of the motive jet line (17) is formed by the housing of the liquid trap (9) and/or the activated charcoal filter (13).

18. Device according to any one of the preceding Claims 13 - 17, **characterized in that** the aggregate jet (18) of the suction-jet pump (16) opens into the swirl pot (2).

19. Device according to any one of the preceding claims, **characterized in that** the swirl pot (2) is connected by way of at least one support (6) to a flange (7) for closing an opening (8) in the fuel tank (1), the support (6) being pivotally connected to the swirl pot (2).

## Revendications

1. Dispositif permettant de transférer du carburant provenant d'un réservoir à carburant (1), comportant une unité de transfert de carburant placée dans un réservoir à carburant (1), laquelle unité de transfert se compose d'un pot d'accumulation (2) avec une pompe à carburant (3), qui y est installée pour refouler, à travers une conduite d'alimentation (5), du carburant contenu dans le pot d'accumulation (2), vers un moteur à combustion interne, et un système d'aération, monté dans le réservoir à carburant (1), destiné à évacuer des vapeurs de carburant hors du réservoir à carburant (1) et composé de conduites d'aération (11) et d'un séparateur de fluides (9), qui permet de précipiter le carburant, l'une des extrémités des conduites d'aération (11) étant placée dans la partie supérieure du réservoir à carburant (1) et l'autre extrémité débouchant dans le séparateur de fluides (9), et un filtre à charbon actif (13), lequel est installé en aval du séparateur de fluides (9) et a une liaison vers l'atmosphère environnante, **caractérisé par le fait que** le séparateur de fluides (9) et le filtre à charbon actif (13) sont placés latéralement près du pot d'accumulation (2) et à la hauteur du pot d'accumulation (2) et que au moins le séparateur de fluides (9) est lié mécaniquement au pot d'accumulation (2).

2. Dispositif selon la revendication 1, **caractérisé par le fait que** le séparateur de fluides (9) et/ou le filtre à charbon actif (13) sont liés au pot d'accumulation (2) au moyen d'un lien enfiché et encliqueté (21, 22).

3. Dispositif selon la revendication 1, **caractérisé par le fait que** le séparateur de fluides (9) et/ou le filtre à charbon actif (13) sont liés au pot d'accumulation (2) par assemblage à fusion de matière, d'une façon préférentielle, par liaison soudée.

4. Dispositif selon la revendication 3, **caractérisé par le fait que**, sur le pot d'accumulation (2), est façonnée, en formant une seule pièce, au moins une zone pour le séparateur de fluides (9) et/ou pour le filtre à charbon actif (13), d'une façon préférentielle, au moyen d'un moulage par injection.

5. Dispositif selon l'une des revendications précédentes, **caractérisé par le fait que** le filtre à charbon actif (13) est placé sur le séparateur de fluides (9).

6. Dispositif selon l'une des revendications précédentes, **caractérisé par le fait que** le séparateur de fluides (9) et/ ou le filtre à charbon actif (13) sont disposés et fixés sur un côté du pot d'accumulation (2).

7. Dispositif selon l'une des revendications 1 à 5, **caractérisé par le fait que** le séparateur de fluides (9) et le filtre à charbon actif (13) sont disposés et fixés sur des côtés différents du pot d'accumulation (2).

8. Dispositif selon l'une des revendications précédentes, **caractérisé par le fait que** le filtre à charbon actif (13) se compose de deux récipients (13a, 13b) branchés l'un derrière l'autre, qui sont fixés au pot d'accumulation (2) et/ ou au séparateur de fluides (9).

9. Dispositif selon l'une des revendications précédentes, **caractérisé par le fait que** le filtre à charbon actif (13) et le séparateur de fluides (9) ont chacun un boîtier ouvert qui sont fermés par un couvercle commun (23).

10. Dispositif selon la revendication 9, **caractérisé par le fait que** le couvercle commun (23) comporte une liaison de trop-plein (14) entre le séparateur de fluides (9) et le filtre à charbon actif (13).

11. Dispositif selon l'une des revendications précédentes, **caractérisé par le fait qu'**une soupape de sécurité (20) en cas de capotage est placée dans le séparateur de fluides (9) au point de branchement (14) vers le filtre à charbon actif (13).

12. Dispositif selon l'une des revendications précédentes, **caractérisé par le fait que** le filtre à charbon actif (13) et le séparateur de fluides (9) ont une hauteur inférieure à celle du pot d'accumulation (2).

13. Dispositif selon l'une des revendications précédentes, **caractérisé par le fait qu'**une pompe à jet aspirant (16), destinée à évacuer du carburant accumulé dans le séparateur de fluides (9), est affectée au séparateur de fluides (9).

14. Dispositif selon la revendication 13, **caractérisé par le fait que** la pompe à jet aspirant (16) est placée dans le séparateur de fluides (9).

15. Dispositif selon la revendication 13, **caractérisé par le fait que** la pompe à jet aspirant (16) est placée près du séparateur de fluides (9) et que l'ouverture d'aspiration de la pompe à jet aspirant (16) est reliée au séparateur de fluides (9).

16. Dispositif selon l'une des revendications précédentes 13 - 15, **caractérisé par le fait que** la pompe à jet aspirant (16) a une conduite (17, 25) de fluide moteur, qui est reliée à la conduite d'alimentation (5) de la pompe à carburant (3).

17. Dispositif selon la revendication 16, **caractérisé par le fait que** au moins une partie de la conduite (17) de fluide moteur est formée par le boîtier du séparateur de fluides (9) et/ou du filtre à charbon actif (13).

18. Dispositif selon l'une des revendications précédentes 13 - 17, **caractérisé par le fait que** le jet résultant (18) de la pompe à jet aspirant (16) débouche dans le pot d'accumulation (2).

19. Dispositif selon l'une des revendications précédentes, **caractérisé par le fait que** le pot d'accumulation (2) est relié, par l'intermédiaire de au moins un support (16) à une flasque (7) destinée à fermer une ouverture (8) du réservoir à carburant (1), le support (6) étant lié en pivotement au pot d'accumulation (2).
